# EUROPEAN PATENT SPECIFICATION

(11) **EP 2 887 621 B1**
(45) Date of publication and mention of the grant of the patent: **22.06.2016**
(21) Application number: 13382547.1
(22) Date of filing: 23.12.2013
(51) Int. Cl.: H04L 29/08, H04L 12/715, G06F 9/50

(54) **Method and apparatus for cross-stratum path computation in a network**
Verfahren und Vorrichtung für schichtenübergreifende Pfadberechnung in einem Netzwerk
Procédé et appareil de calcul de trajet à travers les couches dans un réseau

(43) Date of publication of application: 24.06.2015
(73) Proprietor: Telefonica S.A., 28013 Madrid (ES)
(72) Inventor: Lopez Alvarez, Victor, 28013 Madrid (ES); Contreras Murillo, Luis Miguel, 28013 Madrid (ES); R. López, Diego, 28013 Madrid (ES)
(74) Representative: Carlos Hernando, Borja

(56) References cited:
- EP-A1- 2 391 092
- "3rd Generation Partnership Project; Technical Specification Group Services and System Aspects; Feasibility study on IP Multimedia Subsystem (IMS) based peer-to-peer content distribution services; Stage 2 (Release 12)", 3GPP STANDARD; 3GPP TR 23.844, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 22 June 2012 (2012-06-22), pages 1-41, XP050580730, [retrieved on 2012-06-22]
- DHODY, D.; YOUNG LEE; HUI YANG: "Cross Stratum Optimization (CSO) Enabled PCE Architecture", PARALLEL AND DISTRIBUTED PROCESSING WITH APPLICATIONS (ISPA), 2012 IEEE 10TH INTERNATIONAL SYMPOSIUM ON, 10 July 2012 (2012-07-10), pages 500-505, XP32224072,
- R. ALIMI; R. PENNO; Y. YANG: "ALTO Protocol. IETF Internet-draft (work-in-progress", DRAFT-IETF-ALTO-PROTOCOL-13, September 2013 (2013-09), XP15093149,

## Description

### Field of the art

The present invention generally relates to the field of communication networks. In particular, present invention relates to a method and an apparatus for cross-stratum path computation in a network.

By cross-stratum it has to be understood the cooperation between the application layer and the network layer of said network.

### Background of the invention

Application Layer Traffic Optimization (ALTO) protocol is used to disseminate abstracted network information to elements using the network infrastructure, mostly other layers up in the protocol stack [1]. This information is sent using a cost map. Applications decide, taking into account ALTO cost information, which network connections should request to the network layer. However, there is not a mechanism to correlate cost map creation and path computed by the routing engine in the provisioning process. This is more important in scenarios where ALTO costs are not frequently updated but they are cached. In case there is any change in network since ALTO sends its cost map until application requests for the path, the routing engine may calculate a different path for the request because of network changes.

The problem of this situation is that it may lead to use a connection with a different cost and, consequently, to inefficient network utilization.

New and emerging cloud-based applications require a closer collaboration between application layer and network layer [2]. Among these applications it can be considered real-time data backup, virtual machine migration, server clustering or workload reallocation. In these applications, it is required to assign IT resources in multiple locations and to interconnect remote data centers (DC). Similarly for Content Delivery Networks (CDN), the assignation process of users to be connected to different injection points can use ALTO cost maps to assign which are the optimal locations.

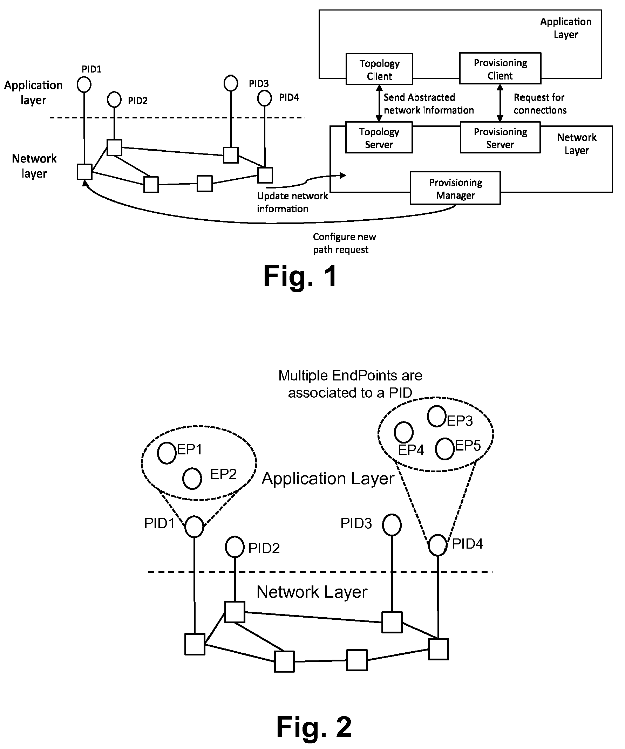

As proposed in US Patent 2012/0054347, a protocol is required to exchange information between the application and the network layer. From a functional point of view, two main functions are required, supporting: (1) the delivery of network information to the application layer and (2) the handling of requested connections from the application layer to the network layer (Fig.1). For this application-network coordination, a typical workflow is the following: 1. Network elements disseminate traffic engineering status information; 2.The network layer circulates information about network connectivity; 3. the application layer based on this information decides two end points and requests a connection between them to the network; and 4. The network layer computes the path between these two locations and configures the network elements.

The ALTO protocol is defined as a service, which provides network information to the application layer based on abstract maps of a network. This information gives a simplified view, but it is useful to route the traffic of the application layers. ALTO Services enable Service Providers to share information about network locations and costs between them. The selection criteria to choose two locations may depend of information such as maximum bandwidth, minimum cross-domain traffic, lower cost to the user, etc.

Since the ALTO protocol exchanges information between network and application layer, ALTO defines Provider-defined Identifiers (PIDs) as the entrance points to the network. Each node in the application layer is known as an End Point (EP). Each EP is assigned to a PID, because PIDs are the entry point of the application in the network. Typically, multiple EPs are grouped in a single PID, as shown in Fig.2.

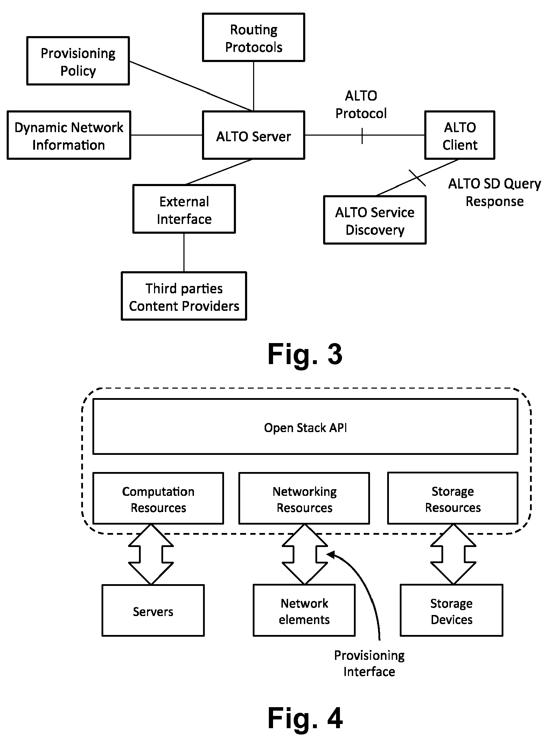

ALTO is defined as a client-server protocol (Fig.3). An ALTO Client uses ALTO Service Discovery to find the closest ALTO Server. Once the ALTO client knows the location of its ALTO Server, the ALTO client can send requests to the server. The ALTO Server aggregates information from multiple systems to provide abstract, unified and useful network information. This information can come from routing protocols, external interfaces, dynamic network information, or provisioning policy. This abstracted information is the one sent to the ALTO client.

The ALTO protocol defines four services:
- *Map Service.* This service returns a map to the ALTO client. There are two different maps:
   ∘ Network Map: associates all End Points to PIDs.
   ∘ Cost Map: provides cost between all PIDs based on multiple criteria.
- *Map Filtering Service.* This service returns a network map or cost map for a subset of PIDs.
- *Endpoint Property Service.* This service allows looking up properties for individual Endpoints, like their location or connectivity type.
- *Endpoint Cost Service.* This service queries for costs and rankings directly amongst Endpoints, not between PIDs like cost map.

The ALTO protocol does not define how the Network Map and Cost Map are updated. Different options are mentioned in [1]. As a PCE is a computation entity in charge of computing paths in MPLS and GMPLS networks, an ALTO server could talk with a PCE to get dynamic network information. The ALTO server may decide costs based on network information provided by the PCE or any other routing engine. Periodically or triggered by an event, the ALTO Server can update this information so it is available for ALTO clients.

There are multiple cloud frameworks that consider direct request for connections to the networks. The most extended cloud frameworks to create private clouds are *OpenNebula, Eucalyptus, and OpenStack.* The Eucalyptus Project appeared originally as a solution more focused on enterprises. However, lately OpenStack is spreading in the commercial community. The main advantage of OpenNebula is that the research community is using and extending it for multiple purposes.

Fig. 4 shows the architecture in OpenStack. There is an interface where OpenStack API can request computing, storage and networking resources. Thanks to these interfaces the cloud framework can control each of the resources required by the upper layer. Inside the OpenStack platform, there is a plugin that enables NaaS (Network as a Service). Using this plugin (at the moment of writing this patent Quantum/Neutron), the Application Layer can request connections from the network layer. This interface providing support to requests for networking resources is what is called in this document "provisioning interface".

Current proposals do not consider a global architecture able to provide a solution to the connection provisioning process from the application to the network. There is not a mechanism to correlate cost map creation and path computed by the routing engine. In case there is any change in the network, the routing engine would calculate a different path for the request, different than the path previously computed. This may lead to using a connection with a different cost and therefore inefficient network utilization.

Though this discussion is essentially focused on a connection-oriented circuit switching scenario (referring to MPLS and PCE, for example), the results are directly applicable in a connection-less packet switching environment, as long as the paths are associated to choices between different IP Autonomous Systems (AS) to route the traffic through.

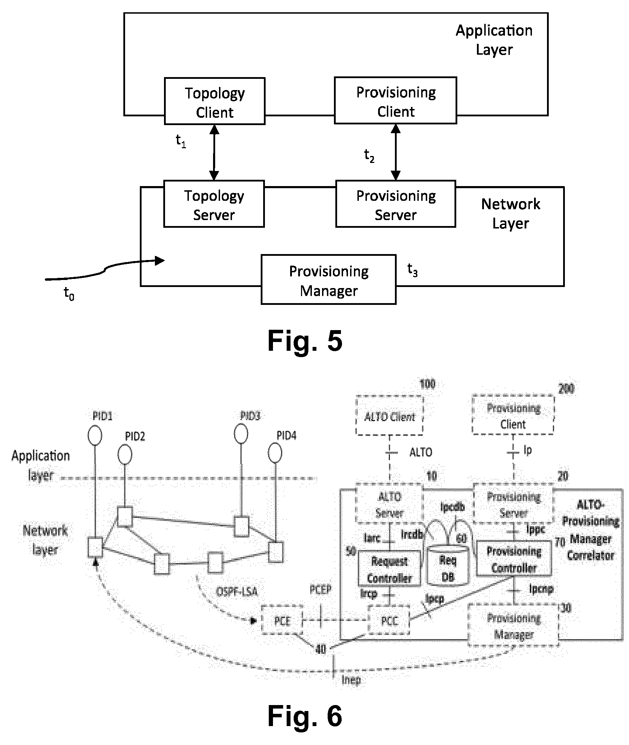

Fig. 5 shows in a timeline the provisioning process since a change happens in the network until the network layer creates a connection requested by the application layer. Network layer disseminates resources information at t₀. Topology information is advertised on request from the application layer at t₁ using the ALTO protocol. If there were a change in the network after t₁, the application layer would request a connection (t₂) assuming that there is a certain cost map. The network layer would provision such connection at t₃, and the application layer would assume the same cost that ALTO advertised applies. There is no architecture able to assure that the cost disseminated using ALTO is the one of the provisioned connection.

European patent application number EP2391092A1 describes a method of enhancing ALTO service for content delivery network. The method involves generating cost map comprising end points, cost value to specify cost to traverse network path, and wherein the network map including end points is received such that each set of end points is associated with subset of endpoints. A master cost map comprising master cost entries with end points and cost value representing cost to traverse network path is generated and said master cost map is outputted from ALTO server to ALTO client.

### References:

[1] R. Alimi, R. Penno, and Y. Yang. ALTO Protocol. IETF Internet-draft (work-in-progress), draft-ietf-alto-protocol-13, September 2013.
[2] Young Lee, Yangsong Xia and Susan Hares, "Method and System for Cross-Stratum Optimization in Application-Transport Networks", US Patent 20120054346.
[3] Dhody, D.; Young Lee; Hui Yang; , "Cross Stratum Optimization (CSO) Enabled PCE Architecture," Parallel and Distributed Processing with Applications (ISPA), 2012 IEEE 10th International Symposium on , vol., no., pp.500-505, 10-13 July 2012
[4] A. Farrel, J.P. Vasseur, and J. Ash, "A path computation element (PCE)- based architecture," IETF RFC 4655, pp. 1-40, August 2006. Online (Dec. 2009).
[5] D. King and A. Farrel, "A PCE-based Architecture for Application-based Network Operations".
[6] B. Niven-Jenkins, N. Bitar, J. Medved, S. Previdi, "Use Cases for ALTO within CDNs", draft-jenkins-alto-cdn-use-cases-02

### Summary of the Invention

According to a first aspect, there is provided a method for cross-stratum path computation in a network, comprising: a) receiving, an application layer traffic optimization (ALTO) server at a network layer of a network, a request from an ALTO client at an application layer of said network to obtain a network cost map for assisting a connection of an end-user; b) computing, by a routing and/or a path computation engine of said network layer, network cost information concerning a plurality of Provider-defined Identifiers (PIDs) stored in said ALTO server; and c) transmitting, the ALTO server, upon receiving said computed network cost information from said routing and/or path computation engine, the obtained network cost map to said ALTO client, the latter deciding through which of said plurality of PIDs to perform said connection with said end-user.

On contrary of the known proposals, in the proposed method, said step b) comprises using a request controller at said network layer and queried by said ALTO server adapting the computed network cost information to an ALTO cost information, said request controller further sending said adapted ALTO cost information to the ALTO server and also storing it in a request database. Furthermore, the method further comprises: d) receiving, by a provisioning server at said network layer, a request from a provisioning client of said application layer to compute a path for setting up a connection between said decided plurality of PIDs, said provisioning server further transmitting said request to a provisioning controller; e) mapping, by said provisioning controller, said received request from the provisioning server into network addresses using ALTO identifiers; f) querying, by said provisioning controller, said routing and/or path computation engine for computing said path according to said network addresses; and g) comparing, by the provisioning controller, upon receiving said computed path from the routing and/or path computation engine, a network cost of the computed path with said cost information stored in said request database.

By network cost it has to be understood the costs associated with network characteristics such as bandwidth, distance in terms of intermediate nodes, and occupancy of the links, etc.

In step g), if said stored cost information is equal or higher than said network cost of the computed path, said connection setting up would be allowed. Alternatively if said stored cost information is lower than said network cost of the computed path the connection setting up would be rejected.

In an embodiment, in case the connection setting up is rejected the method may raise an alert, such an alarm, to said end user

According to a second aspect, there is provided an apparatus for cross-stratum path computation in a network, comprising as commonly in the field an application layer traffic optimization (ALTO) server at a network layer of a network configured to communicate with at least an ALTO client at an application layer of said network and with a routing and/or a path computation engine of said network layer to obtain a network cost map for assisting a connection of an end-user.

On contrary of the known proposals, in the apparatus further includes:
a provisioning server at said network layer configured to communicate with at least a provisioning client of said application layer and with a provisioning manager of said network layer;
a request controller at said network layer configured to:
   adapt, upon receiving a query from said ALTO server, a network cost information computed by said routing and/or a path computation engine concerning a plurality of Provider-defined Identifiers (PIDs) stored in said ALTO server, to an ALTO cost information; and
   send said adapted ALTO cost information to the ALTO server and to also store it in a request database; and
a provisioning controller at the network layer configured to:
   receive a request from said provisioning server regarding a computing of a path for setting up a connection between a decided plurality of PIDs for performing said connection with said end-user;
   map said received request into network addresses using ALTO identifiers;
   query said routing and/or a path computation engine for computing said requested path according to said network addresses; and
   compare a network cost of the computed path with said cost information stored in said request database; and
a plurality of interfaces arranged to the different elements and/or modules connecting them.

The routing and/or path computation engine preferably will comprise a path computation client (PCC) configured to communicate with a path computation element (PCE).

### Brief Description of the Drawings

The previous and other advantages and features will be more fully understood from the following detailed description of embodiments, with reference to the attached, which must be considered in an illustrative and non-limiting manner, in which:
Fig. 1 is an example of an application and a network layer use case for topology dissemination and provisioning.
Fig. 2 illustrates the application and network layer relation in ALTO nomenclature.
Fig. 3 illustrates the client-server ALTO protocol architectural.
Fig. 4 is an example of the OpenStack architecture.
Fig. 5 illustrates timeline of the steps in an application-network coordination process
Fig. 6 is an illustration of the proposed architecture of the present invention according to different embodiments.
Figs. 7a and 7b illustrates the different steps performed for computing the network cost information in order to assist a connection and how said computed network cost information is correlated.
Fig. 8 is a flowchart illustrating the proposed processes for cross-stratum path computation in a network.

### Detailed Description of Several Embodiments

Fig. 6 illustrates the proposed architecture, according to some embodiments, for carrying out a cross-stratum path computation in a network. The main elements or modules forming part of the apparatus of the second aspect of the present invention or ALTO Provisioning Manager Correlator are:
- ALTO Client 100 -ALTO Server 10: These entities are defined in [1], as the elements to perform an ALTO query.
- Provisioning Client 200 - Provisioning Server 20: These entities are able to request connections from the application to the network layer. Although there is not a unique technology to be applied at this interface, OpenStack network plugin (Quantum/Neutron) seems to be the best positioned solution.
- PCE-PCC 40: Path Computation Element and Path Computation Client are defined in [4]. Both entities enable path requesting using the PCE architecture. The PCE in Fig. 6 is shown as an example of a routing computation engine in the architecture described in this proposal. However, any other implementation of a routing computation engine is covered by the invention.
- Provisioning Manager 30: This element defined in [5] is able to configure elements deployed within the network infrastructure.
- Request Controller 50: Creates a cost map for the ALTO server 10. It queries the path computation engine 40 for the network cost between the Provider-defined Identifiers or PIDs stored in the ALTO server 10 and transforms network costs provided by the PCEP response into ALTO costs. Moreover, this controller 50 stores information in a Request Database or Req DB 60 enabling the correlation at a Provisioning Controller 70.
- Req DB 60: Stores information about the requests from the request controller 50 and retrieves such information from the Provisioning Controller 70. The information contained in the Req DB 60 links the processed network cost map with the ALTO Client 100 request (caused by an application request) and indexes it for future reference.
- Provisioning Controller 70. Receives requests from the Provisioning Server 20 and maps said requests into network addresses using ALTO information. It also queries the path computation entity 40 for a path with said network addresses, translates network costs into ALTO costs and further compares this information with the information stored in the Req DB 60 by the Request Controller 50.
   The following interfaces are also related to the proposed architecture.
- larc interface (ALTO Server 10 to Request Controller 50): this interface is used to feed the ALTO Server 10 with a cost map from the Request Controller 50. Said cost map has been processed and adapted by the Request Controller 50 and includes the information obtained from the path computation engine 40.
- Ircp interface (Request Controller 50 to Path Computation Client): this interface allows the Request Controller 50 module to request network costs calculation between the plurality of PIDs to the path computation engine via the Path Computation Client. The network cost information retrieved could be later processed and adapted for compatibility with the information model of the ALTO Server 10.
- Ippc interface (Provisioning Controller 70 to Provisioning Server 20): This interface is used to receive request from the Provisioning Server 20 for establishing connections.
- Ipcnp interface (Provisioning Controller 70 to Provisioning Manager 30): This interface is used to send connection requests to the Provisioning Manager 70 for establishing connections in the network. Before sending the connection request, it is checked if there is coherent with the indication provided previously to the ALTO Server.
- Ipcp interface (Provisioning Controller 70 to Path Computation Client): this interface allows the Provisioning Controller 70 to request network costs calculation between said plurality of PIDs to the path computation engine via the Path Computation Client. The network cost information retrieved could be later processed and adapted for compatibility with the information model used by ALTO.
- Ircdb interface (Request Controller 50 to Req DB 60): this interface allows the Request Controller 50 to load and retrieve information to and from the Req DB 60.
- Ipcdb interface (Provisioning Controller 70 to Req DB 60): this interface allows the Provisioning Controller 70 to retrieve information from the Req DB 60 to check the coherence of the connection request received from the Provisioning Client 200 with the information previously sent to the ALTO Server 10.

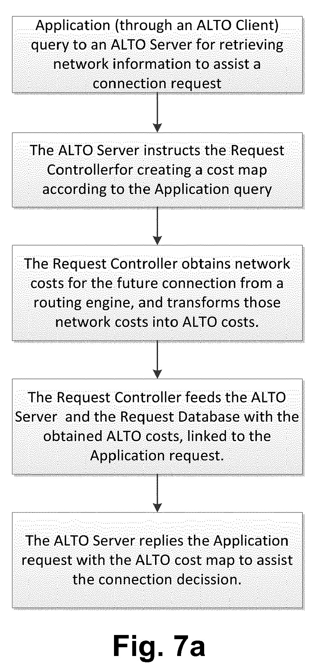

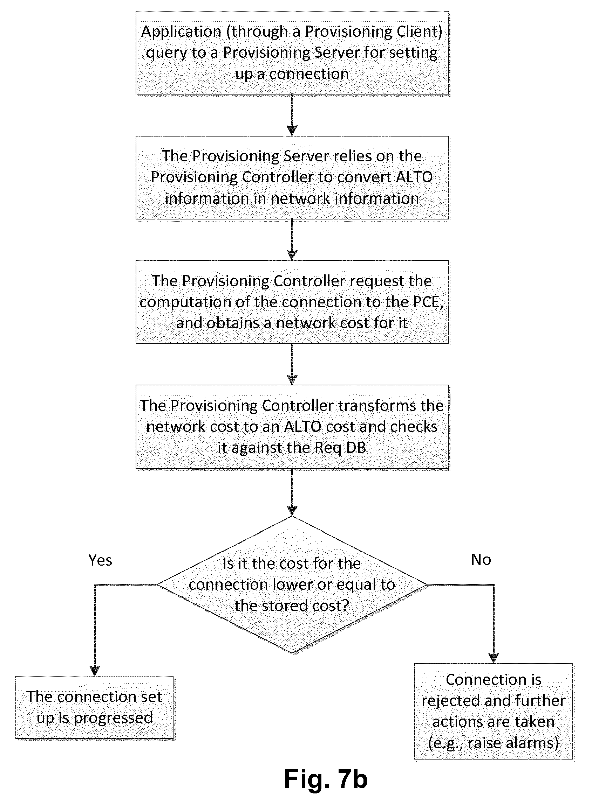

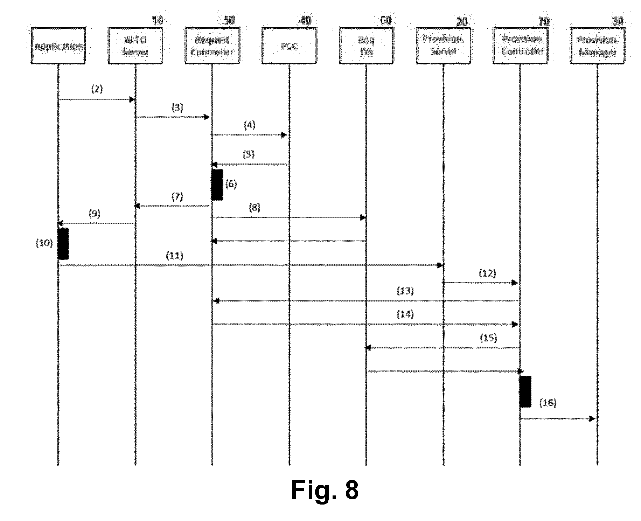

In reference to Figs. 7a and 7b, is illustrated the proposed cross-stratum process correlating a created cost map and a computed path. In this case, the performance of the architecture is described for a use case where a CDN requests ALTO information for selecting the most convenient surrogate or end-point from the point of view of the network cost. The flow of actions is also illustrated in Fig. 8. A CDN controller receives a request from a CDN end-user for content (1). So, the CDN controller, through an ALTO client 100, queries an ALTO Server 10 present in the network for obtaining a network cost map relative to the PIDs containing the end-points of the CDN (2). The ALTO Server 10 sends a request to the Request Controller 50 for creating a network cost map for feeding ALTO Server 10 with network cost information in real time (3). The Request Controller 50 sends a request to the Path Computation Client triggering the path computation on the PIDs of interest (4). At that point, the Path Computation Client responds with network cost information to the Request Controller 50 (5) and then, the latter 50, processes the received information and adapts said information to the ALTO information model (6).

The Request Controller 50 can then respond to the ALTO Server 10 with the processed information received from the network. Preferably, at the same time of said response (even it is possible also at different times), the Request Controller 50 stores said information in the Req DB 60, and indexes it properly for further process (8). The ALTO Server 10, upon receiving the information from the Request Controller 50 returns the generated network cost map to the CDN Controller, through the ALTO Client 100 connected to it (9) allowing the CDN Controller to process the received information and select one of the end-points through the corresponding PID, to be connected to the end-user that triggered the process, also identified by its corresponding PID (10).

Now, the CDN Controller requests to the Provisioning Server 20, through a Provisioning Client 200, the establishment of a connection between the involved PIDs (11). So, the Provisioning Server 20 requests the Provisioning Controller 70 to proceed with the connection, passing ALTO information to it (12). The Provisioning Controller 70 sends a request to the Path Computation Client triggering the path computation on the PIDs of interest (13), and the Path Computation Client responds with network cost information to the Provisioning Controller 70 (14). Then, with the received information from the network, the Provisioning Controller 70 could query the Req DB 60 to check coherence with the network cost calculated at the time of building the ALTO network cost map (15). If there is coherence between the costs, that is, if the cost stored in the Req DB 60 are the same or higher than the one disseminated using ALTO, the network cost of the computed path, the Provisioning Controller 70 requests the Provisioning Manager 30 to proceed with the connection set-up. On contrary, if the cost stored are lower than said network cost of the computed path the connection setting up is rejected and/or default actions are taken, for instance an alarm can be raised in order to alert the end user, etc.

The scope of the invention is defined in the following set of claims.

## Claims

1. A method for cross-stratum path computation in a network, comprising:
a) receiving, at an application layer traffic optimization (ALTO) server (10) at a network layer of a network, a request from an ALTO client (100) at an application layer of said network to obtain a network cost map for assisting a connection of an end-user;
b) computing, by a routing and/or a path computation engine (40) of said network layer, network cost information concerning a plurality of Provider-defined Identifiers (PIDs) stored in said ALTO server (10); and
c) transmitting, from the ALTO server (10), upon receiving said computed network cost information from said routing and/or path computation engine (40), the obtained network cost map to said ALTO client (100), the latter deciding through which of said plurality of PIDs to perform said connection with said end-user,
d) receiving, by a provisioning server (20) at said network layer, a request from a provisioning client (200) of said application layer to compute a path for setting up a connection between said decided plurality of PIDs,
wherein said method is **characterized in that**
in said step b) comprises using a request controller (50) at said network layer and queried by said ALTO server (10) adapting the computed network cost information to an ALTO cost information, said request controller (50) further sending said adapted ALTO cost information to the ALTO server (10) and also storing it in a request database (60), and
in said step d) comprises said provisioning server (20) further transmitting said request to a provisioning controller (70),
and the method further comprises:
e) mapping, by said provisioning controller (70), said received request from the provisioning server (20) into network addresses using ALTO identifiers;
f) querying, by said provisioning controller (70), said routing and/or path computation engine (40) for computing said path according to said network addresses; and
g) comparing, by the provisioning controller (70), upon receiving said computed path from the routing and/or path computation engine (40), a network cost of the computed path with said cost information stored in said request database (60), wherein if said stored cost information being equal or higher than said network cost of the computed path said connection setting up being allowed or alternatively if said stored cost information being lower than said network cost of the computed path the connection setting up being rejected.

2. The method of claim 1, wherein in case said connection setting up being rejected the method comprises raising an alert to said end user.

3. The method of claim 1, wherein said sending and said storing done by the request controller (50) is performed at the same time.

4. The method of claim 1, wherein said sending and said storing done by the request controller (50) is performed at different periods of time.

5. An apparatus for cross-stratum path computation in a network, comprising an application layer traffic optimization (ALTO) server (10) at a network layer of a network configured to communicate with at least an ALTO client (100) at an application layer of said network and with a routing and/or a path computation engine (40) of said network layer to obtain a network cost map for assisting a connection of an end-user, wherein said apparatus is **characterized in that** it further comprises:
- a provisioning server (20) at said network layer configured to communicate with at least a provisioning client (200) of said application layer and with a provisioning manager (30) of said network layer,
- a request controller (50) at said network layer configured to:
adapt, upon receiving a query from said ALTO server (10), a network cost information computed by said routing and/or a path computation engine (40) concerning a plurality of Provider-defined Identifiers (PIDs) stored in said ALTO server (10), to an ALTO cost information; and
send said adapted ALTO cost information to the ALTO server (10) and to also store it in a request database (60); and
- a provisioning controller (70) at the network layer configured to:
receive a request from said provisioning server (20) regarding a computing of a path for setting up a connection between a decided plurality of PIDs for performing said connection with said end-user;
map said received request into network addresses using ALTO identifiers;
query said routing and/or a path computation engine (40) for computing said requested path according to said network addresses; and
compare a network cost of the computed path with said cost information stored in said request database (60), wherein if said stored cost information being equal or higher than said network cost of the computed path said connection setting up being allowed or alternatively if said stored cost information being lower than said network cost of the computed path the connection setting up being rejected; and
- a plurality of interfaces.

6. The apparatus of claim 5, wherein said routing and/or path computation engine (40) at least comprises a path computation client (PCC).

7. The apparatus of claim 6, wherein the PCC is configured to communicate with a path computation element (PCE).

## Patentansprüche

1. Verfahren für schichtenübergreifende Pfadberechnung in einem Netzwerk, bestehend aus:
a) Empfang, an einem Anwendungsschicht-Verkehrsoptimierungs (ALTO - entsprechend der englischen Abkürzung für *application layer traffic optimization)-Server* (10) an einer Netzwerkschicht eines Netzwerkes, einer Anfrage von einem ALTO-Client (100) an einer Anwendungsschicht des Netzwerkes, um eine Netzkosten-Karte zur Unterstützung einer Verbindung eines Endbenutzers zu erhalten;
b) Berechnen, durch eine Routing- und/oder eine Pfadberechnungsmaschine (40) der Netzwerkschicht, der Netzkosteninformation, eine Vielzahl von Provider-definierten Identifiers (PIDs - entsprechend der englischen Abkürzung für *Provider-defined identifier*), die in dem ALTO-Server (10) gespeichert sind, betreffend; und
c) Übersendung, von dem ALTO-Server (10), beim Empfang der berechneten Netzkosteninformation von der Routing- und/oder der Pfadberechnungsmaschine (40), der erhaltenen Netzkosten-Karte an den ALTO-Client (100), wobei letzterer entscheidet, durch welchen der Vielzahl von PIDs die Verbindung mit dem Endbenutzer durchgeführt wird,
d) Empfang, durch einen Bereitstellungs-Server (20) an der Netzwerkschicht, einer Anfrage von einem Bereitstellungs-Client (200) der Anwendungsschicht, um einen Pfad zur Herstellung einer Verbindung zwischen der bestimmten Vielzahl von PIDs zu berechnen,
wobei das Verfahren **dadurch gekennzeichnet ist, dass** es in dem Schritt b) den Einsatz einer Anfrage-Steuerung (50) an der Netzwerkschicht umfasst und durch den ALTO-Server (10), der die berechnete Netzkosteninformation an eine ALTO-Kosteninformation anpasst, abgefragt wird, wobei die Anfrage-Steuerung (50) ferner die angepasste ALTO-Kosteninformation zu dem ALTO-Server sendet und sie auch in einer Anfrage-Datenbank (60) speichert, und
in dem Schritt d) den Bereitstellungs-Server (20), der ferner die Anfrage zu einer Bereitstellungs-Steuerung (70) übersendet, umfasst,
und das Verfahren ferner umfasst:
e) Mapping, durch die Bereitstellungs-Steuerung (70), der empfangenen Anfrage von dem Bereitstellungs-Server (20) in die Netzwerkadressen unter Einsatz von ALTO- Identifikatoren;
f) Abfragen, durch die Bereitstellungs-Steuerung (70), der Routing-und/oder der Pfadberechnungsmaschine (40) zur Berechnung des Pfades entsprechend den Netzwerkadressen;
und
g) Vergleichen, durch die Bereitstellungs-Steuerung (70), beim Empfang des berechneten Pfades von der Routing- und/oder Pfadberechnungsmaschine (40), der Netzkosten des berechneten Pfades mit der Kosteninformation, die in der Anfrage-Datenbank (60) gespeichert ist, wobei, wenn die gespeicherte Kosteninformation gleich oder höher als die Netzkosten des berechneten Pfades ist, die Herstellung der Verbindung zugelassen wird oder alternativ, wenn die gespeicherte Kosteninformation niedriger als die Netzwerkkosten des berechneten Pfades ist, die Herstellung der Verbindung abgelehnt wird.

2. Verfahren nach Anspruch 1, wobei für den Fall, dass die Herstellung der Verbindung abgelehnt wird, das Verfahren eine Alarmierung an den Endbenutzer umfasst.

3. Verfahren nach Anspruch 1, wobei das Senden und das Speichern durch die Anfrage-Steuerung (50) zur gleichen Zeit durchgeführt wird.

4. Verfahren nach Anspruch 1, wobei das Senden und Speichern durch die Anfrage-Steuerung (50) in verschiedenen Zeiträumen durchgeführt wird.

5. Vorrichtung für schichtübergreifende Pfadberechnung in einem Netzwerk, bestehend aus einem Anwendungsschicht-Verkehrsoptimierungs (ALTO)-Server (10) an einer Netzwerkschicht eines Netzwerkes, konfiguriert, um mit mindestens einem ALTO-Client (100) an einer Anwendungsschicht des Netzwerkes zu kommunizieren und mit einer Routing- und/oder einer Pfadberechnungsmaschine (40) der Netzwerkschicht, um eine Netzkosten-Karte zur Unterstützung einer Verbindung eines Endbenutzers zu erhalten, wobei die Vorrichtung **dadurch gekennzeichnet ist, dass** sie ferner umfasst:
- Bereitstellungs-Server (20) an der Netzwerkschicht, konfiguriert, um mit mindestens einem Bereitstellungs-Client (200) der Anwendungsschicht und mit einem Bereitstellungs-Manager (30) der Netzwerkschicht zu kommunizieren,
- Anfrage-Steuerung (50) an der Netzwerkschicht, konfiguriert zum:
Anpassen, beim Empfang einer Abfrage von dem ALTO-Server (10), einer Netzkosteninformation, berechnet durch die Routing- und/oder die Pfadberechnungsmaschine (40), eine Vielzahl von Provider-definierten Identifiers (PIDs), die in dem ALTO-Server (10) gespeichert sind, betreffend, an eine ALTO-Kosteninformation; und
Senden der angepassten ALTO-Kosteninformation an einen ALTO-Server (10) und um sie auch in einer Anfrage-Datenbank (60) zu speichern; und
- Bereitstellungs-Steuerung (70) an der Netzwerkschicht, konfiguriert zum:
Empfangen einer Anfrage von dem Bereitstellungs-Server (20) bezüglich einer Berechnung des Pfades zur Herstellung einer Verbindung zwischen einer bestimmten Vielzahl von PIDs zur Durchführung der Verbindung mit dem Endbenutzer;
Abbilden der empfangenen Anfrage in die Netzwerkadressen unter Einsatz von ALTO Identifikatoren;
Abfragen der Routing- und/oder der Pfadberechnungsmaschine (40) zum Berechnen des angefragten Pfades entsprechend den Netzwerkadressen; und
Vergleichen der Netzkosten des berechneten Pfades mit der Kosteninformation, die in der Anfrage-Datenbank (60) gespeichert ist, wobei, wenn die gespeicherte Kosteninformation gleich oder höher als die Netzkosten des berechneten Pfades ist, die Herstellung der Verbindung zugelassen wird oder alternativ, wenn die gespeicherte Kosteninformation niedriger als die Netzkosten des berechneten Pfades ist, die Herstellung der Verbindung abgelehnt wird; und
- eine Vielzahl von Schnittstellen.

6. Vorrichtung nach Anspruch 5, wobei die Routing- und/oder die Pfadberechnungsmaschine (40) mindestens einen Pfadberechnungs-Client (PCC - entsprechend der englischen Abkürzung für *path computation client*) umfasst.

7. Vorrichtung nach Anspruch 6, wobei der PCC konfiguriert ist, um mit einem Pfadberechnungselement (PCE - entsprechend der englischen Abkürzung für *path computation element*) zu kommunizieren.

## Revendications

1. Procédé pour le calcul de chemin inter-couche dans un réseau, comprenant :
a) la réception, dans un serveur (10) d'optimisation de trafic de couche d'application (ALTO) dans une couche de réseau d'un réseau, d'une requête d'un client ALTO (100) à une couche d'application dudit réseau pour obtenir une carte de coût de réseau pour assister une connexion d'un utilisateur final ;
b) le calcul, par un moteur de routage et/ou de calcul de chemin (40) de ladite couche de réseau, d'informations de coût de réseau concernant une pluralité d'identifiants de fournisseur défini (PIDs) stockées dans ledit serveur ALTO (10) ; et
c) la transmission, par le serveur ALTO (10), après réception desdites informations de coût de réseau calculées dudit moteur de routage et/ou de calcul de chemin (40), de la carte de coût de réseau obtenue audit client ALTO (100), ce dernier décidant à travers de quelle de ladite pluralité de PIDs réaliser ladite connexion avec ledit utilisateur final,
d) la réception, par un serveur d'approvisionnement (20) dans ladite couche de réseau, d'une requête d'un client d'approvisionnement (200) de ladite couche d'application pour calculer un chemin pour établir une connexion entre ladite pluralité de PIDs décidée,
dans lequel ledit procédé est **caractérisé en ce que**
ladite étape b) comprend l'utilisation d'un contrôleur de requête (50) dans
ladite couche de réseau et demandé par ledit serveur ALTO (10) adaptant les informations de coût de réseau calculées auxdites informations de coût ALTO, ledit contrôleur de requête (50) envoyant en outre lesdites informations de coût ALTO adaptées au serveur ALTO (10) et les stockant aussi dans une base de données de requêtes (60), et
ladite étape d) comprend la transmission en outre par ledit serveur d'approvisionnement (20) de ladite requête à un contrôleur d'approvisionnement (70),
et le procédé comprend en outre :
e) le mappage, par ledit contrôleur d'approvisionnement (70), de ladite requête reçue du serveur d'approvisionnement (20) en adresses de réseau en utilisant des identifiants ALTO ;
f) la demande, par ledit contrôleur d'approvisionnement (70), audit moteur de routage et/ou de calcul de chemin (40) de calculer ledit chemin suivant lesdites adresses de réseau ; et
g) la comparaison, par le contrôleur d'approvisionnement (70), après réception dudit chemin calculé du moteur de routage et/ou de calcul de chemin (40), d'un coût de réseau du chemin calculé avec lesdites informations de coût stockées dans ladite base de données de requêtes (60), dans lequel si lesdites informations de coût stockées sont égales ou plus élevées que ledit coût de réseau du chemin calculé ladite connexion qui est établie est autorisée ou alternativement si lesdites informations de coût stockées sont moins élevées que ledit coût de réseau du chemin calculé la connexion qui est établie est refusée.

2. Procédé selon la revendication 1, dans lequel au cas où ladite connexion qui est établie est refusée le procédé comprend le déclenchement d'une alerte audit utilisateur final.

3. Procédé selon la revendication 1, dans lequel ledit envoi et ledit stockage effectués par le contrôleur de requête (50) sont réalisés en même temps.

4. Procédé selon la revendication 1, dans lequel ledit envoi et ledit stockage effectués par le contrôleur de requête (50) sont réalisés à des périodes de temps différentes.

5. Appareil pour le calcul de chemin inter-couche dans un réseau, comprenant un serveur (10) d'optimisation de trafic de couche d'application (ALTO) dans une couche de réseau d'un réseau configuré pour communiquer avec au moins un client ALTO (100) dans une couche d'application dudit réseau et avec un moteur de routage et/ou de calcul de chemin (40) de ladite couche de réseau pour obtenir une carte de coût de réseau pour assister une connexion d'un utilisateur final, dans lequel ledit appareil est **caractérisé en ce qu'**il comprend en outre :
- un serveur d'approvisionnement (20) dans ladite couche de réseau configuré pour communiquer avec au moins un client d'approvisionnement (200) de ladite couche d'application et avec un manager d'approvisionnement (30) de ladite couche de réseau,
- un contrôleur de requête (50) dans ladite couche de réseau configuré pour:
adapter, après réception d'une demande dudit serveur ALTO (10), des informations de coût de réseau calculées par ledit moteur de routage et/ou de calcul de chemin (40) concernant une pluralité d'identifiants de fournisseur-défini (PIDs) stockées dans ledit serveur ALTO (10), à des informations de coût ALTO ; et
envoyer lesdites informations de coût ALTO adaptées au serveur ALTO (10) et pour les stocker aussi dans une base de données de requêtes (60) ; et
- un contrôleur d'approvisionnement (70) dans une couche de réseau configuré pour :
recevoir une requête dudit serveur d'approvisionnement (20) relative à un calcul d'un chemin pour établir une connexion entre une pluralité de PIDs décidée pour réaliser ladite connexion avec ledit utilisateur final ;
mapper ladite requête reçue en adresses de réseau en utilisant des identifiants ALTO ;
demander audit moteur de routage et/ou de calcul de chemin (40) de calculer ledit chemin requis suivant lesdites adresses de réseau ; et comparer un coût de réseau du chemin calculé auxdites informations de coût stockées dans ladite base de données de requêtes (60), dans lequel si lesdites informations de coût stockées sont égales ou plus élevées que ledit coût de réseau du chemin calculé ladite connexion qui est établie est autorisée ou alternativement si lesdites informations de coût stockées sont moins élevées que ledit coût de réseau du chemin calculé la connexion qui est établie est refusée ; et
- une pluralité d'interfaces.

6. Appareil selon la revendication 5, dans lequel ledit moteur de routage et/ou de calcul de chemin (40) comprend au moins un client de calcul de chemin (PCC).

7. Appareil selon la revendication 6, dans lequel le PCC est configuré pour communiquer avec un élément de calcul de chemin (PCE).
